# EUROPEAN PATENT SPECIFICATION

(11) **EP 2 189 346 B1**
(45) Date of publication and mention of the grant of the patent: **16.03.2011**
(21) Application number: 09176334.2
(22) Date of filing: 18.11.2009
(51) Int. Cl.: B60W 20/00, B60K 6/445

(54) **Vehicle having a drive source capable of performing backward driving**
Fahrzeug umfassend eine Antriebsquelle geeignet zum Rückwärtsfahren
Véhicule ayant une source d'entraînement capable de fonctionnner en marche arrière

(30) Priority: 21.11.2008 JP 2008298395
(43) Date of publication of application: 26.05.2010
(73) Proprietor: Yamaha Hatsudoki Kabushiki Kaisha, Iwata-shi, Shizuoka 438-8501 (JP)
(72) Inventor: Sasaki, Kaoru, Iwata-shi, Shizuoka 438-8501 (JP); Nishimura, Tetsuhiko, Iwata-shi, Shizuoka 438-8501 (JP)
(74) Representative: Zimmermann, Tankred Klaus

(56) References cited:
- EP-A2- 1 132 288
- JP-A- 2006 051 853
- US-A- 4 974 695
- US-A1- 2004 188 163

## Description

### BACKGROUND OF THE INVENTION

### 1. Field of the Invention

This invention relates to a vehicle according to the preamble of claim 1 capable of moving forwardly and backwardly.

### 2. Description of Related Art

A hybrid-type motorcycle according to the preamble of claim 1 including an engine (i.e., internal combustion engine) and an electric motor, both of which serve as a driving source used to drive wheels, has been proposed (see Japanese Published Unexamined Patent Application No. 2006-51853). This hybrid-type motorcycle has an ordinary control mode in which the motorcycle ordinarily travels and a walking-while-pushing control mode in which the motorcycle is walked, i.e., in which a driver walks while pushing the motorcycle. In the walking-while-pushing control mode, the direction in which an electric motor is driven can be selected by a toggle switch. In more detail, when the toggle switch is set for a forward movement, the electric motor is driven to make normal rotation in accordance with the operation of a throttle grip, so that wheels rotate in a forward direction. On the other hand, when the toggle switch is set for a backward movement, the electric motor is driven to make reverse rotation in accordance with the operation of the throttle grip, so that the wheels rotate in a backward direction.

### SUMMARY OF THE INVENTION

In the structure of the above-mentioned conventional technique, a complex operation is performed when it is necessary to repeatedly perform switching between a forward movement process and a backward movement process (e.g., when the motorcycle is parked). More specifically, it is necessary to repeatedly perform an operation in which the toggle switch is turned to "forward," and the throttle grip is manipulated, and then perform an operation in which the toggle switch is turned to "backward," and the throttle grip is manipulated. In other words, whenever switching is performed between "forward" and "backward," the toggle switch is required to be operated. In addition, the throttle grip is required to be manipulated both when the vehicle is moved forwardly and when the vehicle is moved backwardly. Therefore, a driver must pay attention to a state in which the toggle switch is set, i.e., must take notice of whether the vehicle makes a forward movement or a backward movement by manipulating the throttle grip. Therefore, the driver cannot move the vehicle forwardly and backwardly through an intuitive operation.

To overcome this problem, the vehicle of the present invention includes a driving source capable of performing forward driving by which a wheel is forwardly rotated and capable of performing backward driving by which the wheel is backwardly rotated, a backward mode setting unit arranged to set a backward mode in which the backward driving of the driving source is allowed, a forward operating unit operated by a driver in order to forwardly drive the driving source, a backward operating unit operated by the driver in order to backwardly drive the driving source, and a driving source control unit arranged to forwardly drive the driving source in response to an operation of the forward operating unit when the backward mode has been set and to backwardly drive the driving source in response to an operation of the backward operating unit when the backward mode has been set.

According to this structure, in a state in which the backward mode has been set, the wheel can be forwardly rotated by operating the forward operating unit, and the wheel can be backwardly rotated by operating the backward operating unit. Therefore, when switching between a forward movement and a backward movement is performed, elements other than the forward and backward operating units are not required to be operated, and a forward operation and a backward operation can be performed at a free timing. Accordingly, switching between the forward movement and the backward movement can be repeatedly performed by an easy operation. More specifically, a driver can park a vehicle by an easy operation to move the vehicle to a proper position by repeatedly making a forward movement and a backward movement.

Furthermore, since the forward operating unit and the backward operating unit are separately provided, switching between the forward movement and the backward movement can be performed by an intuitive operation.

Features to be understood from the contents of this description may be summarized as follows.

1. A vehicle including a driving source capable of performing forward driving by which a wheel is forwardly rotated and capable of performing backward driving by which the wheel is backwardly rotated, a backward mode setting unit arranged to set a backward mode in which the backward driving of the driving source is allowed, a forward operating unit operated by a driver in order to forwardly drive the driving source, a backward operating unit operated by the driver in order to backwardly drive the driving source, and a driving source control unit arranged to forwardly drive the driving source in response to an operation of the forward operating unit when the backward mode has been set and to backwardly drive the driving source in response to an operation of the backward operating unit when the backward mode has been set.

According to this structure, in a state in which the backwardmode has been set, the wheel can be forwardly rotated by operating the forward operating unit, and the wheel can be backwardly rotated by operating the backward operating unit. Therefore, when switching between a forward movement and a backward movement is performed, elements other than the forward and backward operating units are not required to be operated, and a forward operation and a backward operation can be performed at a free timing. Accordingly, switching between the forward movement and the backward movement can be repeatedly performed by an easy operation. More specifically, when a vehicle is parked, a driver can move the vehicle to a proper position by repeatedly making a forward movement and a backward movement through an easy operation.
Furthermore, because the forward operating unit and the backward operating unit are separately provided, switching between the forward movement and the backward movement can be performed by an intuitive operation.
Preferably, the driving source control unit invalidates an operational input of the backward operating unit when the backward mode is not set.
Preferably, the vehicle further includes a mode-setting operating unit that is operated by a driver in order to set the backward mode, and the backward mode setting unit sets the backward mode in response to a setting operation performed by the mode-setting operating unit.

The driving source may include an electric motor capable of making normal rotation and reverse rotation. Additionally, the driving source may include a motor capable of rotating in only one direction and a transmitting mechanism that converts rotation of the motor to forward rotation and backward rotation of a wheel and that transmits these rotations to the wheel.

2. The vehicle of item 1, further including a vehicle speed detecting unit arranged to detect a speed of the vehicle and a mode releasing unit arranged to release the backward mode when a vehicle speed in a forward direction detected by the vehicle speed detecting unit exceeds a predetermined value in a state in which the backward mode has been set.

According to this structure, when the vehicle speed in the forward direction exceeds a predetermined value, the backward mode is automatically released, and therefore the driver is not required to perform a backward-mode releasing operation. If the vehicle speed in the forward direction exceeds the predetermined value, it can be regarded that the vehicle has reached a usual forward traveling state. Therefore, the backward mode can be appropriately released. More specifically, when the vehicle is allowed to leave a parking space while being backwardly moved and then is started, the backward mode can be released without being required to perform a special operation.

3. The vehicle of item 1 or item 2, further including a steering handle, the handle being provided with the forward operating unit and the backward operating unit.

A typical example of the forward operating unit is an accelerator grip mounted on a two-wheeled vehicle or other saddle type vehicles. The saddle type vehicle has a handle bar both ends of which are grasped with driver's both hands, respectively. The accelerator grip is provided at one end (for example, right end) of the handle bar, and the output of the driving source can be adjusted by the rotation of the accelerator grip on the axis of the handle bar. This accelerator grip can be used also as a forward operating unit. Therefore, the driver can achieve the forward movement of the vehicle in the backward mode by performing the same operation as the operation performed when the vehicle normally makes a forward movement. Therefore, the driver can perform a forward operation in the backward mode without having a sense of incompatibility.

The steering handle is also provided with the backward operating unit. Therefore, the driver can perform an operation to forwardly and backwardly move the vehicle without releasing driver's hands from the handle. Therefore, the operation of, for example, parking a vehicle can be more easily performed, and an operation for forward and backward movements can be performed along with a vehicle handling operation for steering.

Preferably, the steering handle is also provided with a mode-setting operating unit arranged to be operated by a driver to set the backward mode. This structure makes it possible to perform the operation more easily.

4. The vehicle of any one of items 1-3, in which the driving source includes an electric motor to be driven by electric power supplied from a battery.

According to this structure, the electric motor is used as a driving source, and therefore the wheel can be forwardly and backwardly rotated by the normal rotation and the reverse rotation of the electric motor. To secure a long traveling distance, a large-capacity battery is required to be mounted on the vehicle, and therefore the weight of the battery and the weight of the entire vehicle become larger in proportion to an increase in capacity of the battery. Therefore, in some cases, it becomes difficult to move the vehicle by human power, and hence there will be a desire to form a structure capable of moving the vehicle not only forwardly but also backwardly by using a driving force supplied from the driving source.

5. The vehicle of any one of items 1-4, further including an engine arranged to generate a driving force by which the wheel is forwardly rotated.

A vehicle including an engine (internal combustion engine) in addition to an electric motor is called a "hybrid-type." A hybrid-type vehicle includes, for example, an electric motor, a battery, an engine, and an electric generator, and becomes great in weight. Therefore, in some cases, it becomes difficult to move the hybrid-type vehicle by human power, and hence there will be a desire to form a structure capable of moving the hybrid-type vehicle not only forwardly but also backwardly by using a driving force supplied from the driving source.

Additionally, in some of the hybrid-type vehicles, a driving-force transmitting system disposed between an engine and a wheel is always in a connected state. In such a hybrid-type vehicle, while the engine is being stopped, the engine works as a load when the wheel is rotated. Therefore, in some cases, it becomes difficult to move the hybrid-type vehicle by human power, and hence there will be a desire to form a structure capable of moving the hybrid-type vehicle not only forwardly but also backwardly by driving the electric motor and other driving sources.

6. The vehicle of item 5, further including a clutch arranged to perform switching between a connected state in which a driving force of the engine is transmitted to the wheel and a disconnected state in which transmission of a driving force between the engine and the wheel is cut, and a clutch control unit arranged to control the clutch so as to reach the disconnected state when the backward mode is set.

According to this structure, the clutch is brought into a disconnected state in the backward mode. Therefore, the engine never works as a load when the driving source is backwardly driven. Therefore, when the driving source is the electric motor, electric power consumption can be reduced. Additionally, transmission of a driving force between the engine and the wheel is cut in the backward mode, and therefore the engine can be prevented from working as a load when the vehicle is moved by human power. As a result, a burden imposed on a user can be reduced when walking while pushing the vehicle.

Other elements, features ,steps, characteristics and advantages of the present invention will become more apparent from the following detailed description of the preferred embodiments with reference to the attached drawings.

### BRIEF DESCRIPTION OF THE DRAWINGS

FIG. 1 is a schematic side view for explaining a structure of a hybrid-type motorcycle that is a vehicle according to an embodiment of the present invention.
FIG. 2 is a schematic configuration view for explaining a structure of a hybrid system and that of a reduction mechanism.
FIG. 3A is a plan view for explaining a structure provided in a handle, and FIG. 3B is a front view seen from the direction of arrow B of FIG. 3A.
FIG. 4 is a block diagram for explaining an electric structure of a main part of the motorcycle.
FIG. 5 is a control block diagram showing the control details of an electric motor controlled by a control unit.
FIG. 6 is a flowchart for explaining an operation relating to a backward mode.

FIG. 7 is a plan view for explaining a structural example in which another switch used to set the backward mode is disposed independently of a backward switch.

### DETAILED DESCRIPTION OF THE PREFERRED EMBODIMENTS

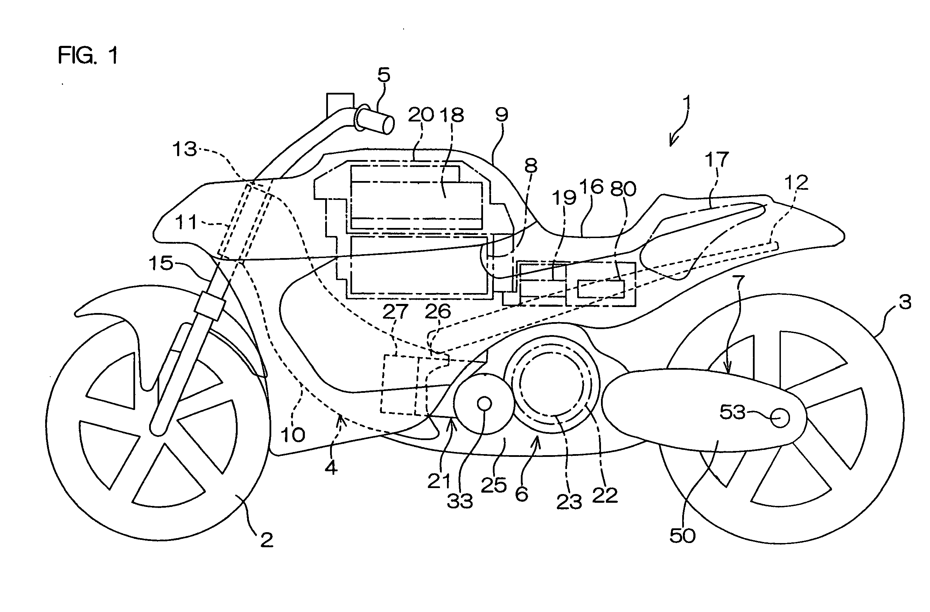

FIG. 1 is a schematic side view for explaining a structure of a hybrid-type motorcycle that is a vehicle according to an embodiment of the present invention. The motorcycle 1 includes a front wheel 2, a rear wheel 3, a vehicle body frame 4, a handle 5, a hybrid system 6, a reduction mechanism 7, and a battery 8. A vehicle body cover 9 is attached to the vehicle body frame 4.

The vehicle body frame 4 includes a main frame 10, a head tube 11 connected to a forward part of the main frame 10, and a seat frame 12 extending backwardly from the main frame 10.

A steering shaft 13 is rotatably inserted into the head tube 11. The handle 5 is fixed to an upper end of the steering shaft 13. A pair of right and left front forks 15 are attached to a lower end of the steering shaft 13. A front wheel 2 serving as a driven wheel is rotatably supported by a lower end of each front fork 15.

A seat 16 on which vehicle occupants (i.e., a driver and a pillion passenger in this embodiment) sit is attached to the seat frame 12. A fuel tank 17 is disposed under the rear part of the seat 16, and is supported by the seat frame 12.

The hybrid system 6 is attached to the rear-end part of the main frame 10. The reduction mechanism 7 is attached to the rear-end part of the hybrid system 6 such that the decelerating mechanism 7 can swing in the up-down direction. The rear wheel 3 serving as a driving wheel is rotatably supported by a shaft at the rear-end part of the reduction mechanism 7. A battery box 20 is supported by the main frame 10. The battery 8 and a DC-DC converter 18 are housed in the battery box 20.

The hybrid system 6 includes an engine (i.e., internal combustion engine) 21, an electric motor 22, and an electric generator 23. The electric motor 22 is a driving source capable of performing forward driving and backward driving. The hybrid system 6 is a system capable of supplying both the power of the engine 21 and the power of the electric motor 22 to a common output shaft. In other words, the hybrid system 6 is a system that generates power by using the engine 21 and the electric motor 22 in conjunction with each other. The electric motor 22 receives a power supply from the battery 8, and is driven. In more detail, the voltage of the battery 8 is raised by the DC-DC converter 18, and is supplied to the electric motor 22. The electric generator 23 is driven by the power of the engine 21. The electric power generated by the electric generator 23 is used to charge the battery 8.

The engine 21 is an internal combustion engine that generates power by burning fuel supplied from the fuel tank 17. The engine 21 includes a cylinder body 26 and a cylinder head 27. The cylinder body 26 is disposed on the forward side of a casing 25 of the hybrid system 6, and the cylinder head 27 is connected to the forward part thereof.

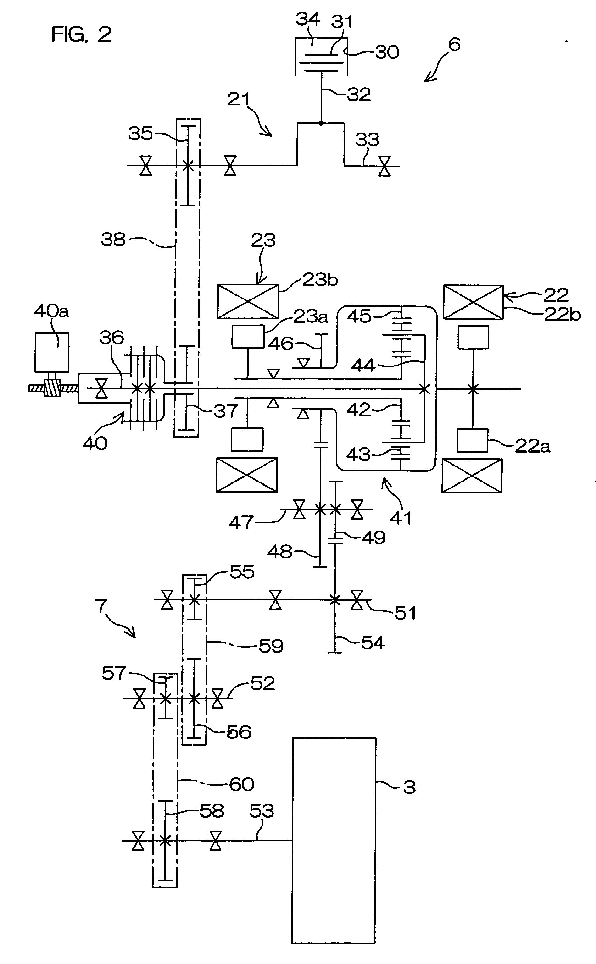

FIG. 2 is a schematic configuration view for explaining a structure of the hybrid system 6 and that of the reduction mechanism 7. The engine 21 includes a piston 31 that slides and reciprocates in a substantially columnar cylinder 30 defined in the cylinder body 26. The piston 31 is connected to a crankshaft 33 through a connecting rod 32. A combustion chamber 34 is defined by the cylinder 30 and the piston 31. Fuel burns in the combustion chamber 34. The reciprocation of the piston 31 caused by fuel combustion is converted into the rotary motion of the crankshaft 33 by means of the connecting rod 32 and the crankshaft 33.

A drive sprocket 35 is connected to an end (in this embodiment, a left end) of the crankshaft 33. A main shaft 36 extends in the rightward-leftward direction (i.e., rightward-leftward direction with respect to the motorcycle 1) behind the crankshaft 33. A driven sprocket 37 is attached to the main shaft 36 such that the driven sprocket 37 is rotatable relative to the main shaft 36. A chain 38 serving as a power transmission means is stretched and looped between the drive sprocket 35 and the driven sprocket 37. The rotation of the drive sprocket 35 is transmitted to the driven sprocket 37 by means of the chain 38. Of course, a power transmission means that uses one or more transmission gear pairs may be employed to transmit power from the crankshaft 33 to the main shaft 36.

The rotation of the driven sprocket 37 is transmitted to the main shaft 36 through a clutch 40. The clutch 40 can be controlled to reach a connected state in which the rotation of the driven sprocket 37 is transmitted to the main shaft 36 and to reach a disconnected state in which the rotation of the driven sprocket 37 is not transmitted to the main shaft 36. More specifically, the clutch 40 may be a wet type multiple-plate clutch, or a shoe type clutch, or another type clutch, and include an urging unit and a driving mechanism 40a. The urging unit may include a compression coil spring and other springs by which the clutch 40 is urged to reach a connected state. The driving mechanism 40a may be arranged to release the connected state against an urging force applied by the urging unit. The driving mechanism 40a may have a structure including an actuator, such as an electric motor, and a motion converting mechanism (e.g., rack and pinion mechanism) that converts the rotation of the electric motor into the displacement of, for example, a clutch plate. The clutch 40 also functions as a torque limiter in a connected state. In other words, sliding is caused on the connected surfaces of the clutch 40 when an excessive torque exceeding a tolerance is given from the crankshaft 33 to the main shaft 36. Therefore, a shock can be avoided when an engine torque is excessively changed.

The main shaft 36 is provided with a power distributing mechanism 41. The power distributing mechanism 41 is arranged to distribute power generated by the engine 21 to the rear wheel 3 and the electric generator 23. The power distributing mechanism 41 is a planetary gear mechanism in this embodiment. More specifically, the power distributing mechanism 41 includes a sun gear 42, a plurality of planetary gears 43, a planetary carrier 44, and a ring gear 45.

The planetary carrier 44 is connected to the main shaft 36 such that the planetary carrier 44 is nonrotatable relative to the main shaft 36. In other words, the planetary carrier 44 concurrently rotates together with the main shaft 36. The planetary gears 43 are rotatably attached to the planetary carrier 44. In other words, each of the planetary gears 43 can rotate on its own axis, and can revolve around the main shaft 36 in accordance with the rotation of the planetary carrier 44. The sun gear 42 is engaged with the planetary gears 43 from the inside thereof. The sun gear 42 is disposed coaxially with the main shaft 36, and is rotatable relative to the main shaft 36. The ring gear 45 is a ring-shaped gear that is engaged with the planetary gears 43 from the outside thereof. The ring gear 45 is disposed coaxially with the main shaft 36, and is rotatable relative to the main shaft 36.

When the planetary carrier 44 rotates in accordance with the rotation of the main shaft 36, the planetary gears 43 revolve around the main shaft 36 while the planetary gears 43 rotate on their own axes, respectively. Therefore, the sun gear 42 and the ring gear 45 rotate around the main shaft 36.

In this embodiment, the sun gear 42 is connected to the electric generator 23. The ring gear 45 is connected to the electric motor 22. Therefore, the rotation of the main shaft 36 caused by the crankshaft 33 is distributed and transmitted to the electric generator 23 and the electric motor 22 by means of the power distributing mechanism 41. On the other hand, the rotation of the electric generator 23 and that of the electric motor 22 can be transmitted to the main shaft 36 by means of the power distributing mechanism 41, and can further be transmitted to the crankshaft 33 through the clutch 40.

The electric motor 22 and the electric generator 23 have the form of, for example, a brushless DC motor. More specifically, the electric motor 22 includes a rotor (inner) 22a that concurrently rotates together with the ring gear 45 and a stator (outer) 22b that faces the rotor 22a. The electric generator 23 includes a rotor (inner) 23a that concurrently rotates together with the sun gear 42 and a stator (outer) 23b that faces the rotor 23a.

An output shaft 47 extends in the rightward-leftward direction behind the main shaft 36. A large-diameter gear 48 and a small-diameter gear 49 are fixed to the output shaft 47. The large-diameter gear 48 is engaged with a gear 46 fixed to a rotary shaft of the ring gear 45. Therefore, the rotation of the ring gear 45 is transmitted to the output shaft 47.

The reduction mechanism 7 is housed in a reduction-mechanism case 50 (see FIG. 1). An input shaft 51, an intermediate shaft 52, an output shaft 53, a gear 54, sprockets 55 to 58, and chains 59 and 60 are housed in the reduction-mechanism case 50. The input shaft 51, the intermediate shaft 52, and the output shaft 53 extend in the rightward-leftward direction.

The gear 54 is fixed to an end (in this embodiment, a right end) of the input shaft 51. The gear 54 is engaged with the gear 49 fixed to the output shaft 47 of the hybrid system 6. The sprocket 55 is fixed to an opposite end (in this embodiment, a left end) of the input shaft 51. A large-diameter sprocket 56 and a small-diameter sprocket 57 are fixed to the intermediate shaft 52. The chain 59 is stretched and looped between the large-diameter sprocket 56 and the sprocket 55 disposed on the input shaft 51. Furthermore, the sprocket 58 is fixed to the output shaft 53, and the chain 60 is stretched and looped between the sprocket 58 and the small-diameter sprocket 57 disposed on the intermediate shaft 52. The rear wheel 3 is connected to the output shaft 53. According to this structure, a rotational force output by the hybrid system 6 is reduced and transmitted to the output shaft 53, so that the rear wheel 3 is rotationally driven.

Power generated by the engine 21 is transmitted as follows. The crankshaft 33 is rotated by the engine 21. This rotation is transmitted to the main shaft 36 through the sprockets 35, 37, the chain 38, and the clutch 40. As a result, the planetary carrier 44 of the power distributing mechanism 41 rotates, and, accordingly, the planetary gears 43 revolve around the main shaft 36 while the planetary gears 43 rotate on their respective own axes. Accordingly, the sun gear 42 and the ring gear 45 rotate around the main shaft 36. The rotor 23a of the electric generator 23 is connected to the sun gear 42, and therefore the rotation of the sun gear 42 enables the electric generator 23 to generate electric power. The rotation of the ring gear 45 is transmitted to the rear wheel 3 through the gears 46, 48, 49 and the reduction mechanism 7. Therefore, when the crankshaft 33 is rotated by the engine 21, the electric generator 23 generates electric power if the clutch 40 is in a connected state, and, at the same time, the rear wheel 3 is rotationally driven.

On the other hand, electric power is supplied from the battery 8 to the electric motor 22, and, as a result, the rotor 22a rotates, and the ring gear 45 connected thereto rotates. The rotation of the ring gear 45 is transmitted to the rear wheel 3 through the gears 46, 48, 49 and the reduction mechanism 7. The rotation of the ring gear 45 enables the planetary gears 43 to revolve around the main shaft 36 while rotating on their respective own axes. As a result, the planetary carrier 44 rotates, and the main shaft 36 fixed to the carrier 44 also rotates. Therefore, if the clutch 40 is in a connected state, the rotation of the main shaft 36 is transmitted to the crankshaft 33. If the ignition of the engine 21 and the supply of fuel are started in this state, the engine 21 can be started.

When the motorcycle 1 is started, the electric motor 22 is driven in a normal rotational direction (i.e., is forwardly driven), and the engine 21 is kept in a stopped state. As a result, the rear wheel 3 rotates forwardly. In other words, the normal rotational direction of the electric motor 22 is a direction in which the rear wheel 3 is forwardly rotated. If necessary, electric power is also supplied to the electric generator 23, and this electric generator 23 is operated as an electric motor. The rotational direction is a normal rotational direction that is a direction in which the rear wheel 3 is forwardly rotated. As a result, the rotation speed of the crankshaft 33 and the rotation speed of the engine 21 are increased. When the rotation speed of the engine 21 exceeds a predetermined rotation speed, the ignition of the engine 21 and the supply of fuel are started, and the engine 21 is started.

In a constant-speed traveling state, the power supply to the electric generator 23 is stopped, and the electric generator 23 reaches a power generating state. Accordingly, the battery 8 is charged with generated electric power.

When the motorcycle 1 is decelerated, and, as a result, the engine rotation speed becomes below the predetermined rotation speed, the engine 21 is stopped, and the rear wheel 3 is brought into a rotated state by driving only the electric motor 22 or by driving not only the electric motor 22 but also the electric generator 23 if necessary.

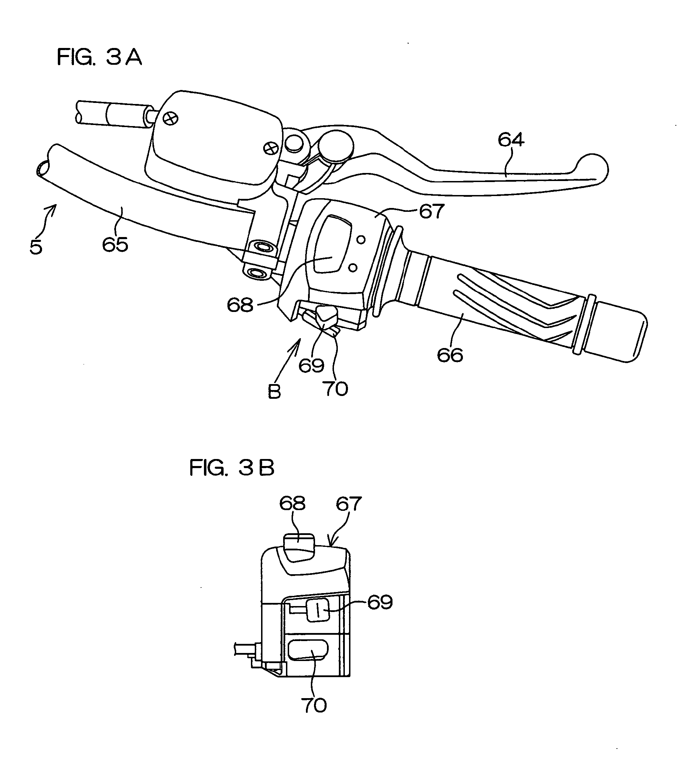

FIG. 3A is a plan view for explaining a structure provided in the handle 5, showing a neighborhood of the right end of the handle 5. An accelerator grip 66 is attached to the right end of a handle bar 65. The accelerator grip 66 is an acceleration operating member rotatable on the axis of the handle bar 65. A driver grasps the accelerator grip 66 with driver's right hand, and rotates the accelerator grip 66 forwardly and backwardly, thereby adjusting the output of the hybrid system 6. More specifically, the output control is performed such that an output is increased by rotating the accelerator grip 66 toward the near side (i.e., backwardly) and such that an output is decreased by rotating the accelerator grip toward the far side (i.e., forwardly).

A switch case 67 is attached to the handle bar 65 inside the accelerator grip 66. As shown in FIG. 3B (which is a front view seen from the direction of arrow B of FIG. 3A), the switch case 67 is provided with a stop switch 68, a hazard switch 69, and a backward switch 70. The stop switch 68 is used to stop all control operations including the control operation of the hybrid system 6. The hazard switch 69 is used to blink a hazard lamp. The backward switch 70 has a function used as a mode-setting operating unit to set a backward mode and a function used as a backward operating unit to rotate the electric motor 22 in the reverse direction (i.e., to backwardly rotate the electric motor 22) in this embodiment.

The backward mode is an operational mode that allows the electric motor 22 to be backwardly driven. In this embodiment, the backward mode can be set by pushing the backward switch 70 for a long time. In the backward mode, the electric motor 22 can be backwardly driven by operating the backward switch 70. The accelerator grip 66 is used for a driver's operation to forwardly drive the electric motor 22 in the backward mode. Therefore, the backward switch 70 is used both as a mode-setting operating unit and as a backward operating unit in this embodiment. The accelerator grip 66 is used as a forward operating unit.

In this embodiment, the stop switch 68 is disposed on the upper surface of the switch case 67, and the hazard switch 69 and the backward switch 70 are disposed on the side surface on the near side of the switch case 67. Therefore, the backward switch 70 is capable of being operated with the thumb of driver's right hand with which the accelerator grip 66 is grasped.

The switch case 67 additionally has a built-in acceleration sensor (not shown) arranged to detect a manipulated amount of the accelerator grip 66 and that outputs a signal based on this manipulated amount. Reference numeral 64 designates a brake lever.

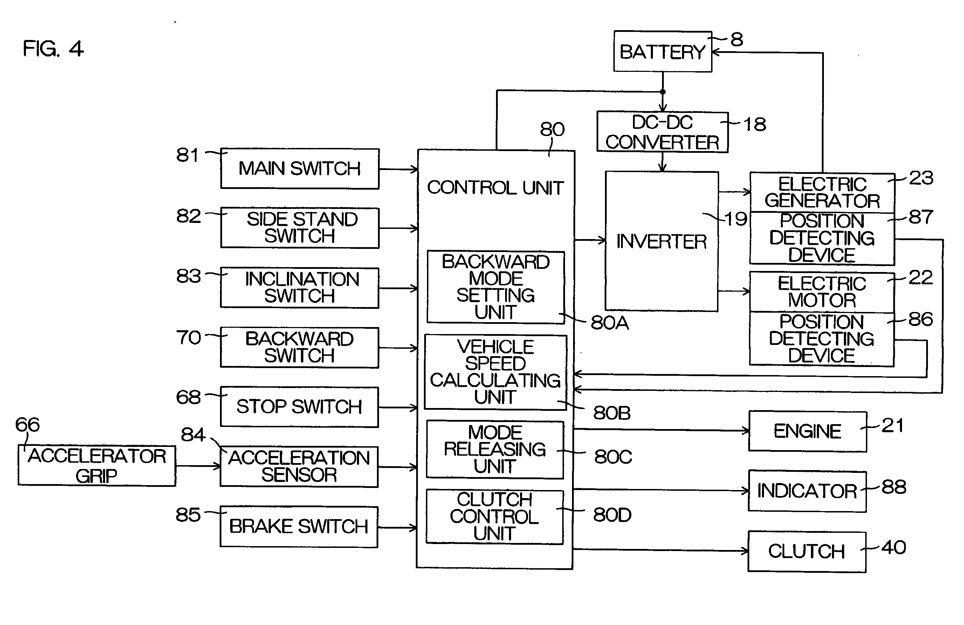

FIG. 4 is a block diagram for explaining an electric structure of a main part of the motorcycle 1. The control unit 80 serving as a driving-source control unit is operated by receiving electric power from the battery 8, and includes a CPU and necessary memories. Electric power supplied from the battery 8 is boosted by the DC-DC converter 18, and is then supplied from the inverter 19 to the electric motor 22 and the electric generator 23. The supply of the electric power to the electric motor 22 and to the electric generator 23 is adjusted by allowing the control unit 80 to control the inverter 19. Furthermore, the control unit 80 executes the ignition control and the fuel supply control for the engine 21.

A main switch 81, a side stand switch 82, an inclination switch 83, the backward switch 70, the stop switch 68, an acceleration sensor 84, a brake switch 85, the clutch 40, an indicator 88, etc., are connected to the control unit 80.

The main switch 81 is operated to turn on the power for the system including the control unit 80. The side stand switch 82 is arranged to detect whether a side stand is in a working position (i.e., position in which the motorcycle 1 is supported) or is in a receding position (i.e., position in which the side stand does not interfere with the ground when the motorcycle 1 banks) and to output a signal indicative of a detection result. The inclination switch 83 is arranged to detect whether the inclination angle in the rightward-leftward direction of the motorcycle 1 exceeds a predetermined threshold and to output a signal indicative of a detection result. The acceleration sensor 84 is arrangedto detect amanipulatedamount (i.e., accelerator opening degree) of the accelerator grip 66 and to output a signal indicative of the manipulated amount. The brake switch 85 is arranged to detect whether the brake is working and to output a signal indicative of a detection result. The indicator 88 may include an LED lamp that is lit, for example, when the backward mode is set and that is blinked while a backward movement is being performed. The indicator 88 is mounted, for example, on a meter section disposed near the center of the handle 5.

The electric motor 22 and the electric generator 23 are provided with position detecting devices 86 and 87 (e. g. , encoders) that detect rotational positions of the rotors 22a and 23a, respectively. The control unit 80 drives the electric motor 22 and the electric generator 23 in accordance with the rotational positions detected by the position detecting devices 86 and 87. Furthermore, the control unit 80 calculates a difference (i.e., difference between control periods) in position detected by the position detecting device 86 attached to the electric motor 22, and this difference is used as an index showing the rotation speed of the rear wheel 3, i.e., indicating the vehicle speed.

The control unit 80 performs a control operation by which the clutch 40 is brought into a disconnected state in the backward mode and by which the clutch 40 is brought into a connected state in modes other than the backward mode. The clutch is so controlled in order for the engine 21 not to work as a load when the electric motor 22 is backwardly driven, thereby restricting electric power consumption. Additionally, a load caused when a user walks while pushing the motorcycle 1 can be reduced by bringing the clutch 40 into a disconnected state.

The control unit 80 substantially has a plurality of function units realized by allowing the CPU to execute a predetermined program. A backward mode setting unit 80A, a vehicle speed calculating unit 80B, a mode releasing unit 80C, and a clutch control unit 80D are included in these function units. The backward mode setting unit 80A responses to an operation performed for backward mode setting, and sets a backward mode that allows the backward driving of the electric motor 22. In this embodiment, the operation for backward mode setting is to push the backward switch 70 for a long time. The vehicle speed calculating unit 80B calculates a difference (difference in a unit time) in position detected by the position detecting device 86 as a piece of vehicle speed information. Therefore, a vehicle speed detecting unit is composed of the position detecting device 86 and the vehicle speed calculating unit 80B. The mode releasing unit 80C releases the backward mode when a vehicle speed in the forward direction calculated by the vehicle speed calculating unit 80B exceeds a predetermined value in a state in which the backward mode has been set. The clutch control unit 80D controls the clutch 40, and brings the clutch 40 into a disconnected state when the backward mode is set.

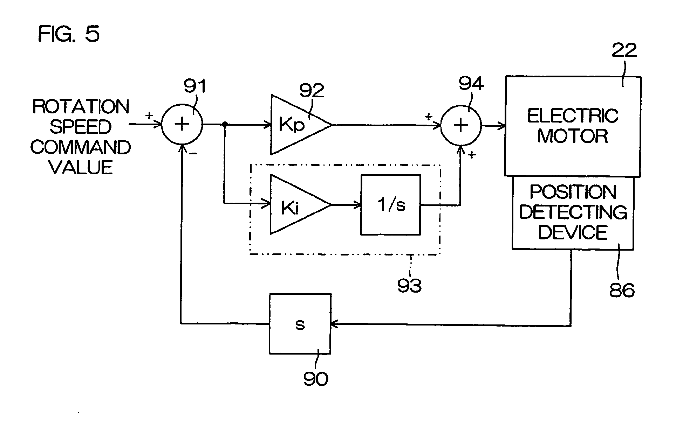

FIG. 5 is a control block diagram showing the control details of the electric motor 22 controlled by the control unit 80. The control unit 80 generates a rotation speed command value for the electric motor 22, and performs feedback control so that the rotation speed command value is achieved. An example in which PI (proportional integral) control is performed is shown in FIG. 5. In detail, a difference (corresponding to a differential value) in the output of the position detecting device 86 is calculated by a difference calculating section 90, and the resulting difference is fed back as an actual rotation speed of the electric motor 22. A deviation between the actual rotation speed and the rotation speed command value is calculated by a deviation calculating section 91. A proportional element and an integral element with respect to the resulting deviation are calculated by a proportional element calculating section 92 and an integral element calculating section 93, respectively, and are added together by an adding section 94. As a result, the current value that should be supplied to electric motor 22 is obtained. The inverter 19 is driven based on this current value. In FIG. 5, Kp is a proportional gain, Ki is an integration gain, and s is a differential operator.

The control unit 80 generates a positive rotation speed command value when the electric motor 22 should be normally driven (i.e., driven in a normal rotational direction). On the other hand, the control unit 80 generates a negative rotation speed command value when the electric motor 22 should be backwardly driven (i.e., driven in a reverse rotational direction).

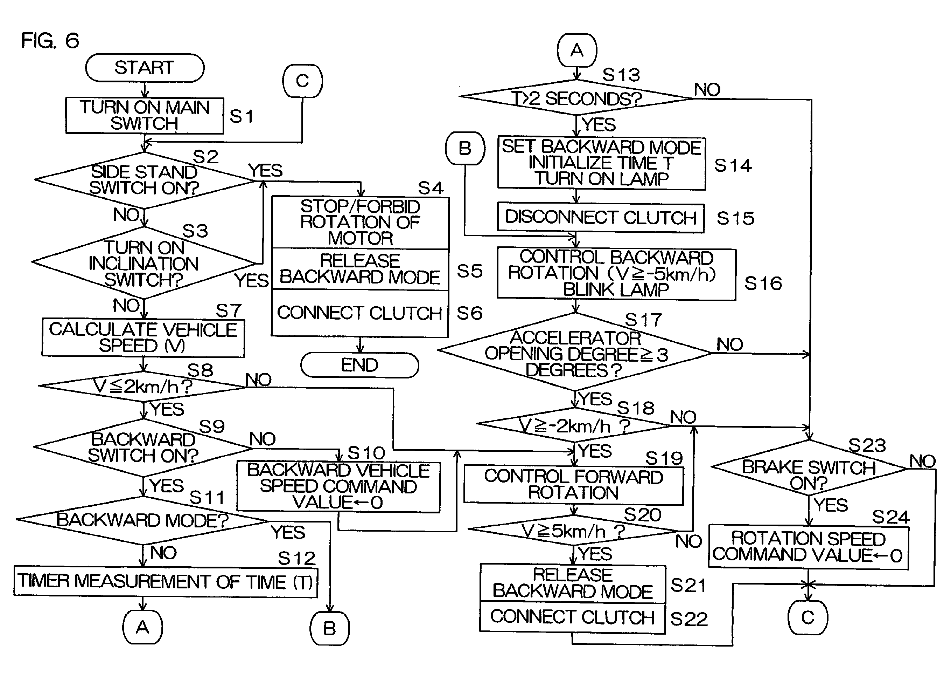

FIG. 6 is a flowchart for explaining an operation relating to the backward mode. The main switch 81 is first turned on (step S1), the control unit 80 then starts processing, and the output of the side stand switch 82 and that of the inclination switch 83 are examined (steps S2 and S3). If the side stand switch 82 is in an ON state (step S2: YES), the side stand is in an operating state (i.e., state of supporting the motorcycle 1). Therefore, if the electricmotor 22 is rotating, the control unit 80 stops the rotation of the electric motor 22, and, if the electric motor 22 is being stopped, the control unit 80 forbids the rotation of the electric motor 22 (step S4). If the inclination switch 83 is in an ON state (step S3: YES), the vehicle body is in a state of having a large inclination angle. Therefore, if the electric motor 22 is rotating, the control unit 80 stops the rotation of the electric motor 22, and, if the electric motor 22 is being stopped, the control unit 80 forbids the rotation of the electric motor 22 (step S4). In either case, if the backward mode is set, it is released or canceled (step S5), and the clutch 40 is brought into a connected state (step S6).

If both the side stand switch 82 and the inclination switch 83 are in an OFF state (step S2: NO, step S3: NO), the control unit 80 calculates the vehicle speed V (i.e., rotation speed of the rear wheel 3; wheel speed) (step S7; function of the vehicle speed calculating unit 80B). As mentioned above, the vehicle speed V is obtained by calculating a difference between control periods of the outputs of the position detecting device 86 attached to the electricmotor 22. This is appropriate because the rotation speed of the electric motor 22 is proportional to the rotation speed of the rear wheel 3. If the resulting vehicle speed V is positive, the rear wheel 3 forwardly rotates, and, contrary thereto, if the vehicle speed V is negative, the rear wheel 3 backwardly rotates.

Thereafter, the control unit 80 determines whether the vehicle speed V is below a forward vehicle speed threshold (in this embodiment, 2 km/h) (step S8). If the vehicle speed V exceeds the forward vehicle speed threshold (step S8: NO), the control unit 80 performs forward rotation control (step S19). That is, because the vehicle speed in the forward direction is large, it is inappropriate to backwardly drive the electric motor 22, and therefore only the forward driving of the electric motor 22 is allowed, and the backward driving thereof is forbidden.

If the vehicle speed V is below the forward vehicle speed threshold (step S8: YES), the control unit 80 further determines whether the backward switch 70 is in an ON state (step S9). If the backward switch 70 is in an OFF state (step S9: NO), the control unit 80 regards the backward vehicle speed command value as zero (0), then forbids backward driving (step S10), and performs forward rotation control (step S19).

If the backward switch 70 is in an ON state (step S9: YES), the control unit 80 determines whether the backward mode has been set (step S11). If the backward mode has not yet been set (step S11: NO), the control unit 80 allows a timer to measure the lapse of time (step S12). When the backward switch 70 is turned on, the timer starts time measurement, and, when the backward switch 70 is turned off, the timer ends the time measurement and is reset.

If the time T measured by the timer exceeds a predetermined time (in this embodiment, two seconds) (step S13: YES), it is determined that the backward switch 70 has been pushed for a long time for the backward mode. Thereafter, the control unit 80 sets the control mode of the electric motor 22 as the backward mode (step S14: function of the backward mode setting unit 80A). Additionally, the control unit 80 initializes the measurement time T, and causes the indicator 88 to make a display (lamp lighting) showing that the backward mode is being set. Still additionally, the control unit 80 controls the clutch 40 such that the clutch 40 reaches a disconnected state in the backward mode (step S15; function of the clutch control unit 80D), in order for the engine 21 so as not to work as a load applied on the electric motor 22.

If the time T measured by the timer is below the predetermined time (step S13: NO), the backward mode is not set. Thereafter, the control unit 80 examines whether the brake switch 85 is in an ON state (step S23). If the brake switch 85 is in an ON state (step S23: YES), the control unit 80 sets the rotation speed command value for the electric motor 22 at zero (0) (step S24), and the process from step S2 is repeatedly performed. If the brake switch 85 is in an OFF state (step S23: NO), the process of step S24 is skipped.

If it is determined at step S11 that the backward mode has already been set, the process ranging from step S12 to step S15 is skipped.

If the backward switch 70 is in an ON state in a state in which the backward mode has been set, the control unit 80 executes a control operation to backwardly drive the electric motor 22 (step S16). At this time, the control unit 80 executes the backward driving of the electric motor 22 so as to limit the vehicle speed in the backward direction to 5 km/h or less (i.e. , V≥-5 km/h). Furthermore, at this time, the control unit 80 causes the indicator 88 to blink so as to show that backward driving is being made. Furthermore, at this time, a sound may be generated from a speaker or another sound-emitting device notifying that backward driving is being made.

If the backward mode is not set (step S13: NO), the backward driving of the electric motor 22 (step S16) is not performed. In other words, the operation of the backward switch 70 is invalidated or ignored in a state in which the backward mode has not been set.

Thereafter, the control unit 80 refers to an output signal of the acceleration sensor 84 to determine whether the accelerator opening degree is a predetermined value or more (in this embodiment, three degrees) (step S17). If the accelerator opening degree is the predetermined value or more (step S17: YES), the control unit 80 determines whether the vehicle speed V is above a predetermined backward vehicle speed threshold (in this embodiment, -2 km/h) (step S18). In other words, it is determined whether the absolute value of the vehicle speed in the backward direction is, for example, 2 km/h or less. If a negative determination is made at this step, the absolute value of the vehicle speed in the backward direction is large, and therefore it is inappropriate to forwardly drive the electric motor 22. Therefore, the process proceeds to step S23.

If a positive determination is made at step S18, the control unit 80 forwardly drives the electric motor 22 (step S19). At this time, the control unit 80 sets a rotation speed command value corresponding to an accelerator opening degree detected by the acceleration sensor 84, and applies feedback control onto the electric motor 22 so that the rotation speed command value is achieved. Thereafter, the control unit 80 determines whether the vehicle speed V is above a backward mode releasing threshold (in this embodiment, 5 km/h) (step S20). If a positive determination is made at this step, the control unit 80 releases the backward mode (step S21; function of the mode releasing unit 80C), and causes the clutch 40 to return to a connected state.

If the vehicle speed V is less than the backward mode releasing threshold (step S20: NO), the control unit 80 performs the process from step S23.

As described above, according to this embodiment, the backward mode can be set by pushing the backward switch 70 for a long time. The electric motor 22 can be forwardly driven by manipulating the accelerator grip 66 while the backward mode is being set. The electric motor 22 can be backwardly driven by operating the backward switch 70. Therefore, when switching between a forward operation and a backward operation, another switching operation is not needed, and therefore the operation can be easily performed. Additionally, switching between a forward operation and a backward operation can be performed at an arbitrary timing. Still additionally, the forward operation achieved by manipulating the accelerator grip 66 is the same as an operation performed when the vehicle normally travels, and therefore special skill is never required for the operation. Still additionally, the accelerator grip 66 is allocated to a forward operation, and the backward switch 70 is allocated to a backward operation, and therefore the forward driving and the backward driving of the electric motor 22 can be performed by an intuitive operation. Still additionally, the backward switch 70 is disposed at a position at which an operation can be performed with driver's right hand with which the accelerator grip 66 is grasped, and therefore switching between forward driving and backward driving can be more easily performed. As a result, it is possible to easily perform an operation when a forward movement and a backward movement are repeatedly made, for example, in order to park the motorcycle 1.

Still additionally, when the vehicle speed in the forward direction reaches a mode releasing threshold, the backward mode is automatically released, and therefore a user is not required to perform a special mode releasing operation. For example, if the motorcycle 1 is pulled out from a parking area while being moved backwardly, and is then started, the backward mode can be automatically released in accordance with an increase in the vehicle speed.

Still additionally, in this embodiment, the clutch 40 is brought into a disconnected state in the backward mode, and therefore the engine 21 being in a stopped state can avoid working as a load imposed on the electric motor 22. As a result, electric power consumption can be reduced, and the exhaustion of the battery 8 can be restricted. Still additionally, when the backwardmode is set and when the clutch 40 is in a disconnected state, the engine 21 can be prevented from working as a load when the vehicle is walked. Therefore, a load imposed when the motorcycle 1 is walked can be reduced.

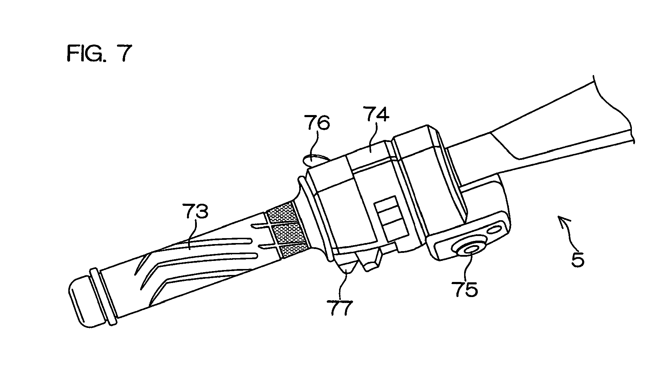

Although one embodiment of the present invention has been described as above, the present invention can be carried out in other forms. For example, although the backward switch 70 is used not only to set a backward mode but also to perform a backward operation in the above embodiment, a backward-mode setting switch may be provided in addition to the backward switch 70. One example of such a structure is shown in FIG. 7. In this structural example, a backward mode setting switch 75, a forward switch 76, and a backward switch 77 are disposed at the left end of the handle 5. In more detail, a left grip part 73 to be grasped with driver's left hand is attached to the left end of the handle 5, and a switch case 74 is attached to the handle 5 thereinside. The backward switch 77 is disposed on a side surface on the near side, and the forward switch 76 is disposed on a side surface on the far side at the left end of the switch case 74. Furthermore, the backward mode setting switch 75 is disposed on a side surface on the near side at the right end of the switch case 74. According to this structure, a driver can set the backward mode at once by operating the backward mode setting switch 75 (i.e., by performing a switch pushing operation). The driver can perform switching between the forward movement and the backward movement of the motorcycle 1 by operating the forward switch 76 and the backward switch 77 while the backward mode is being set. The forward switch 76 and the backward switch 77 may be arranged in a manner opposite to that of this example.

Although the clutch 40 is controlled by the control unit 80 in the above-mentioned embodiment, a structure may be employed in which the clutch 40 is formed as a manual type clutch, so that a user performs switching between a connected state and a disconnected state.

Additionally, a structure may be employed in which the charged state of the battery 8 is monitored by the control unit 80, and the setting of the backward mode is forbidden when the remaining energy of the battery 8 is small.

Additionally, although the hybrid-type motorcycle has been taken as an example in the above embodiment, the present invention is applicable to an electric two-wheeled vehicle in which only an electric motor is used as a driving source. Additionally, the present invention is applicable to a tricycle or to vehicles having four or more wheels without being limited to the two-wheeled vehicle. If the present invention is applied especially to a vehicle having a handle bar, such as a saddle type vehicle, the operability for forward and backwardmovements can be remarkably improved, for example, when the vehicle is parked.

## Claims

1. A vehicle (1) comprising:
a driving source (22) capable of performing forward driving by which a wheel (3) is forwardly rotated and capable of performing backward driving by which the wheel (3) is backwardly rotated;
a backward mode setting unit (80A) arranged to set a backwardmode in which the backward driving of the driving source (22) is allowed; and
a forward operating unit (66) operated by a driver in order to forwardly drive the driving source (22);
**characterized by**
a backward operating unit (70) operated by the driver in order to backwardly drive the driving source (22); and
a driving source control unit (80) arranged to forwardly drive the driving source (22) in response to an operation of the forward operating unit (66) when the backward mode has been set and to backwardly drive the driving source (22) in response to an operation of the backward operating unit (70) when the backward mode has been set.

2. The vehicle (1) of claim 1, further **characterized by**:
a vehicle speed detecting unit (80B) arranged to detect a speed of the vehicle (1); and
a mode releasing unit (80C) arranged to release the backward mode when a vehicle speed in a forward direction detected by the vehicle speed detecting unit (80B) exceeds a predetermined value in a state in which the backward mode has been set.

3. The vehicle (1) of claim1 or claim2, further **characterized by** a steering handle (5) which is provided with the forward operating unit (66) and the backward operating unit (70).

4. The vehicle (1) of any one of claims 1-3, further **characterized in that** the driving source includes an electric motor (22) to be driven by electric power supplied from a battery (8).

5. The vehicle (1) of any one of claims 1-4, further **characterized by** an engine (21) arranged to generate a driving force by which the wheel (3) is forwardly rotated.

6. The vehicle (1) of claim 5, further **characterized by**:
a clutch (40) arranged to perform switching between a connected state in which a driving force of the engine (21) is transmitted to the wheel (3) and a disconnected state in which transmission of a driving force between the engine (21) and the wheel (3) is cut; and
a clutch control unit (80D) arranged to control the clutch (40) so as to reach the disconnected state when the backward mode is set.

## Patentansprüche

1. Ein Fahrzeug (1), das folgende Merkmale umfasst:
eine Antriebsquelle (22), die in der Lage ist, Vorwärtsantreiben durchzuführen, wodurch ein Rad (3) vorwärts gedreht wird, und in der Lage ist, Rückwärtsantreiben durchzuführen, wodurch das Rad (3) rückwärts gedreht wird;
eine Rückwärtsmoduseinstelleinheit (80A), die angeordnet ist, um einen Rückwärtsmodus einzustellen, in dem das Rückwärtsantreiben der Antriebsquelle (22) ermöglicht ist; und
eine Vorwärtsbetriebseinheit (66), die durch einen Fahrer betrieben wird, um die Antriebsquelle (22) vorwärts anzutreiben;
**gekennzeichnet durch**
eine Rückwärtsbetriebseinheit (70), die **durch** den Fahrer betrieben wird, um die Antriebsquelle (22) rückwärts anzutreiben; und
eine Antriebsquellensteuereinheit (80), die angeordnet ist, um die Antriebsquelle (22) vorwärts anzutreiben ansprechend auf einen Betrieb der Vorwärtsbetriebseinheit (66), wenn der Rückwärtsmodus eingestellt wurde, und die Antriebsquelle (22) rückwärts anzutreiben ansprechend auf einen Betrieb der Rückwärtsbetriebseinheit (70), wenn der Rückwärtsmodus eingestellt wurde.

2. Das Fahrzeug (1) gemäß Anspruch 1, ferner **gekennzeichnet durch**:
eine Fahrzeuggeschwindigkeitserfassungseinheit (80B), die angeordnet ist, um eine Geschwindigkeit des Fahrzeugs (1) zu erfassen; und
eine Modusfreigabeeinheit (80C), die angeordnet ist, um den Rückwärtsmodus freizugeben, wenn eine Fahrzeuggeschwindigkeit in einer Vorwärtsrichtung, die **durch** die Fahrzeuggeschwindigkeitserfassungseinheit (80B) erfasst wird, in einem Zustand, in dem der Rückwärtsmodus eingestellt wurde, einen vorbestimmten Wert überschreitet.

3. Das Fahrzeug (1) gemäß Anspruch 1 oder Anspruch 2, das ferner **gekennzeichnet ist durch** einen Lenkgriff (5), der mit der Vorwärtsbetriebseinheit (66) und der Rückwärtsbetriebseinheit (70) versehen ist.

4. Das Fahrzeug (1) gemäß einem der Ansprüche 1 bis 3, das ferner **dadurch gekennzeichnet ist, dass** die Antriebsquelle einen elektrischen Motor (22) umfasst, der durch elektrische Leistung angetrieben wird, die von einer Batterie (8) geliefert wird.

5. Das Fahrzeug (1) gemäß einem der Ansprüche 1 bis 4, das ferner **gekennzeichnet ist durch** einen Motor (21), der angeordnet ist, um eine Antriebskraft zu erzeugen, **durch** die das Rad (3) vorwärts gedreht wird.

6. Das Fahrzeug (1) gemäß Anspruch 5, ferner **gekennzeichnet durch**:
eine Kupplung (40), die angeordnet ist, um Schalten zwischen einem verbundenen Zustand, in dem eine Antriebskraft des Motors (21) auf das Rad (3) übertragen wird und einem getrennten Zustand, in dem die Übertragung einer Antriebskraft zwischen dem Motor (21) und dem Rad (3) abgeschnitten ist, durchzuführen; und
eine Kupplungssteuereinheit (80D), die angeordnet ist, um die Kupplung (40) zu steuern, um den getrennten Zustand zu erreichen, wenn der Rückwärtsmodus eingestellt ist.

## Revendications

1. Véhicule (1), comprenant:
une source d'entraînement (22) capable de réaliser un entraînement en avant par lequel une roue (3) tourne en avant et capable de réaliser un entraînement en arrière par lequel la roue (3) tourne en arrière;
une unité de réglage de mode arrière (80A) aménagée pour établir un mode arrière dans lequel est permis l'entraînement en arrière de la source d'entraînement (22); et
une unité de fonctionnement en avant (66) actionnée par un entraînement pour entraîner en avant la source d'entraînement (22);
**caractérisé par**
une unité de fonctionnement en arrière (70) actionnée par l'entraînement pour entraîner en en arrière la source d'entraînement (22); et
une unité de commande de source d'entraînement (80) aménagée pour entraîner en avant la source d'entraînement (22) en réponse à un fonctionnement de l'unité de fonctionnement en avant (66) lorsque le mode en arrière a été établi et pour entraîner en arrière la source d'entraînement (22) en réponse à un fonctionnement de l'unité de fonctionnement en arrière (70) lorsque le mode en arrière a été établi.

2. Véhicule (1) selon la revendication 1, **caractérisé par** ailleurs par:
une unité de détection de vitesse de véhicule (80B) aménagé pour détecter une vitesse du véhicule (1); et
une unité de libération de mode (80C) aménagée pour libérer le mode en arrière lorsqu'une vitesse de véhicule en direction en avant détectée par l'unité de détection de vitesse de véhicule (80B) excède une valeur prédéterminée dans un état dans lequel a été établi le mode en arrière.

3. Véhicule (1) selon la revendication 1 ou la revendication 2, **caractérisé par** ailleurs par un guidon (5) qui est muni de l'unité de fonctionnement en avant (66) et de l'unité de fonctionnement en arrière (70).

4. Véhicule (1) selon l'une quelconque des revendications 1 à 3, **caractérisé par le fait que** la source d'entraînement comporte un moteur électrique (22) à entraîner par de l'énergie électrique fournie par une batterie (8).

5. Véhicule (1) selon l'une quelconque des revendications 1 à 4, **caractérisé par** ailleurs par un moteur (21) aménagé pour générer une force d'entraînement par laquelle la roue (3) tourne en avant.

6. Véhicule (1) selon la revendication 5, **caractérisé par** ailleurs par:
un embrayeur (40) aménagé pour réaliser une commutation entre un état connecté dans lequel une force d'entraînement du moteur (21) est transmise à la roué (3) et un état déconnecté dans lequel est coupée la transmission d'une force d'entraînement entre le moteur (21) et la roue (3); et
une unité de commande d'embrayeur (80D) aménagée pour commander l'embrayeur (40) de manière à atteindre l'état déconnecté lorsque le mode en arrière est établi.
